**Europäisches Patentamt**

**European Patent Office**

**Office européen des brevets**

(19)

(11) Veröffentlichungsnummer: **0 039 420**
**B1**

# (12) EUROPÄISCHE PATENTSCHRIFT

(45) Veröffentlichungstag der Patentschrift:
**29.01.86**

(21) Anmeldenummer: **81102681.4**

(22) Anmeldetag: **09.04.81**

(51) Int. Cl.⁴: **G 01 K 3/06,** G 01 K 3/02,
G 01 K 13/10, G 01 F 23/30

(54) Vorrichtung zur Messung der Füllhöhe und der mittleren Temperatur von Flüssigkeiten in Tankanlagen.

(30) Priorität: **28.04.80 DE 3016690**

(43) Veröffentlichungstag der Anmeldung:
**11.11.81 Patentblatt 81/45**

(45) Bekanntmachung des Hinweises auf die Patenterteilung:
**29.01.86 Patentblatt 86/5**

(84) Benannte Vertragsstaaten:
**AT BE CH FR GB IT LI LU NL SE**

(56) Entgegenhaltungen:
**CH - A - 444 516**
**DE - A - 1 182 875**
**FR - A - 2 431 685**
**US - A - 3 653 262**

**Die Akte enthält technische Angaben, die nach dem Eingang der Anmeldung eingereicht wurden und die nicht in dieser Patentschrift enthalten sind.**

(73) Patentinhaber: **BK ELEKTRONIK MESSGERÄTE GMBH, Eiswerkestrasse, D-2850 Bremerhaven (DE)**

(72) Erfinder: **Rapp, Eugen, Tilsiter Strasse 12, D-2805 Stuhr II (DE)**

(74) Vertreter: **Eisenführ & Speiser, Martinistrasse 24, D-2800 Bremen 1 (DE)**

## Beschreibung

Die Erfindung betrifft eine Vorrichtung zur Messung der Füllhöhe und der mittleren Temperatur von Flüssigkeiten in Tankanlagen, mit einem in der Tankanlage vertikal angeordneten Messrohr, einem ersten in Längsrichtung im Messrohr aufgespannten Widerstandselement, dessen Endanschlüsse aus dem Messrohr herausgeführt sind, einem zweiten in Längsrichtung im Messrohr aufgespannten Widerstandselement, dessen unterer Endanschluss aus dem Messrohr herausgeführt ist, einer Referenzspannungsquelle, die bei Messung der Füllhöhe an die Endanschlüsse des ersten Widerstandselements angeschlossen ist, einer elektrischen Messeinheit und einer Recheneinheit, die unter Verwendung der gemessenen Füllhöhe der Flüssigkeit deren mittlere Temperatur berechnet.

Aus der US-A-3 653 262 ist eine derartige Vorrichtung bekannt. Das zur Messung der Füllhöhe dienende erste Widerstandselement ist dabei in geringem Abstand von einem leitenden Träger angeordnet und berührt diesen unter dem Einfluss der Flüssigkeit, woraufhin eine Messung des über der Flüssigkeit liegenden Teilwiderstandes dieses Widerstandselements und daraus die Berechnung der Füllhöhe möglich wird.

Zur Bestimmung der mittleren Temperatur ist ein zweites temperaturabhängiges Widerstandselement vorgesehen, welches in verschiedenen Höhen im Messrohr mit einem Temperatur-Messkreis fest verbunden ist. Je nach der am ersten Widerstandselement gemessenen Füllhöhe wird zur Temperaturmessung anschliessend der Teilwiderstand des zweiten Widerstandselementes über den nächsten über dem Flüssigkeitsspiegel liegenden Anschluss gemessen. Unter Verwendung der zuvor ermittelten Füllhöhe wird dann in einer Recheneinheit die mittlere Temperatur der Flüssigkeit berechnet und angezeigt. Nachteilig bei dieser bekannten Vorrichtung ist es, dass der Kontakt zwischen dem ersten Widerstandselement und dem leitenden Träger nicht immer zuverlässig schon unmittelbar unter dem Flüssigkeitsspiegel einsetzt, wodurch Fehler bei der Bestimmung der Füllhöhe entstehen. Nachteilig ist es ferner, dass die Messung der mittleren Temperatur – unabhängig von der exakten aktuellen Füllhöhe – nur an diskreten vorgegebenen Festhöhen erfolgt, wodurch auch die Bestimmung der mittleren Temperatur ungenau ist. Die US-A-3 653 262 beschreibt auch eine andere Vorrichtung, bei der nicht alle Endanschlüsse der verwendeten Leiter aus dem Messrohr herausgeführt werden. Einige dieser Leiter besitzen ein freies Ende im Messrohr.

Aus der CH-A-444 516 ist eine Vorrichtung bekannt, bei der zwei Widerstandselemente innerhalb eines Messrohres aufgespannt sind, von denen jeweils nur der untere Endanschluss aus dem Messrohr herausgeführt ist, während die anderen Endanschlüsse isoliert enden. Ein nachführbarer Schieber ist als Kontaktbrücke ausgebildet, welche die beiden Widerstandselemente in der jeweiligen Füllhöhe leitend miteinander verbindet. Zwischen den beiden Aussenanschlüssen wird jeweils der Widerstand unter Verwendung einer Referenzspannungsquelle gemessen, welcher sich aus einer Serienschaltung der oberen Teilwiderstände der beiden Widerstandselemente ergibt. Aus dem gemessenen Widerstandswert wird dann auf die Füllhöhe der im Tank enthaltenen Flüssigkeit geschlossen. Eine Ermittlung der mittleren Temperatur der Flüssigkeit ist mit dieser bekannten Vorrichtung nur möglich, wenn die Füllhöhe durch irgendeine andere Messung bekannt ist und die in der Flüssigkeit eingetauchten Teilwiderstände der Widerstandselemente berechnet werden.

Aus der FR-A-2 431 685 ist ein Füllhöhenmessgerät bekannt, bei dem die Ausbreitungszeit gemessen wird, welche Ultraschallsignale von einer vorgegebenen Stelle im Messrohr bis zu einem beweglichen Schieber benötigen, der im Messrohr als Ultraschall-Reflektor ausgebildet ist und von einer das Messrohr umgebenden Nachführeinrichtung jeweils auf der Füllhöhe der Flüssigkeit gehalten wird. Aus der Ausbreitungszeit der Ultraschallsignale lässt sich somit die aktuelle Position des Schiebers und damit die Füllhöhe innerhalb des Tanks mittels eines Rechners berechnen, sofern die im Messrohr vorhandene Temperatur näherungsweise bekannt ist. Dieses Messverfahren ist aufwendig und stark von der Temperaturverteilung in dem Ultraschall-Ausbreitungsmedium innerhalb des Messrohres abhängig. Da die Temperatur im Messrohr erheblichen zeitlichen und auch örtlichen Schwankungen unterworfen ist, führt dieses Verfahren, welches bei der Berechnung der Füllhöhe von einer konstanten Temperatur ausgeht, zu ungenauen Ergebnissen.

Aufgabe der Erfindung ist es demgegenüber, eine Vorrichtung der eingangs genannten Art derart weiterzubilden, dass die Messung der Füllhöhe und der mittleren Temperatur der im Tank vorhandenen Flüssigkeit einfach und genau möglich ist.

Diese Aufgabe wird bei einer Vorrichtung nach Art des Oberbegriffes des Anspruches 1 erfindungsgemäss dadurch gelöst, dass eine das Messrohr umgebende Nachführeinrichtung einen Schieber im Messrohr führt, der je einen Schleifkontakt längs des ersten und zweiten Widerstandselements entlangschleift, dass die beiden Schleifkontakte aus dem Messrohr herausgeführt sind, dass der obere Endanschluss des zweiten Widerstandselements nirgends angeschlossen ist, dass bei der Messung der Füllhöhe die elektrische Messeinheit an den zugeordneten ersten Schleifkontakt angeschlossen ist und die abgegriffene Teilspannung misst und ein entsprechendes Signal zur Berechnung der Füllhöhe an die Recheneinheit abgibt, dass bei der Messung der mittleren Temperatur die Referenzspannungsquelle an den unteren Endanschluss des zweiten Widerstandselements und den zugeordneten zweiten Schleifkontakt geschaltet ist und dass die Messeinheit zwischen der Referenzspannungsquelle und dem zweiten Schleifkontakt angeschlossen ist und den abgegriffenen Teilwiderstand des zweiten Widerstandelements misst und ein entsprechendes Signal zur Berechnung der mittleren Temperatur an die Recheneinheit abgibt.

Die Vorteile der Erfindung liegen insbesondere darin,

– dass sowohl bei der Bestimmung der Füllhöhe als auch der mittleren Temperatur die jeweils in der Flüssigkeit befindliche Teillänge des ersten und zweiten Widerstandelements genau abgegriffen werden,

– dass am ersten Widerstandelement eine dieser Füllhöhe entsprechende Teilspannung genau gemessen wird, und aus dieser Teilspannung die Füllhöhe genau berechnet wird, da in diese Berechnung lediglich die Temperaturdifferenz aus der mittleren Temperatur der Flüssigkeit und der mittleren Temperatur des über der Flüssigkeit liegenden Leerraumes den Fehler bestimmt,

– und dass am zweiten Widerstandelement der untere, von der Flüssigkeit umgebene Teilwiderstand genau gemessen wird und, da die Füllhöhe dann bekannt ist, die mittlere Temperatur der Füllflüssigkeit ermittelt wird.

Wesentlich ist dabei, dass die Bestimmung der Füllhöhe unabhängig von der mittleren Temperatur im Messrohr und daher relativ genau ist.

Bei Verwendung der genauen Füllhöhe ist dann die Bestimmung der mittleren Temperatur der Flüssigkeit ebenfalls genau und einfach durchzuführen.

Bevorzugt bestehen die Widerstandselemente aus je einem Widerstandsdraht, der mittels einer Spannfeder an einem Ende gespannt ist. Besonders bevorzugt ist der Widerstandsdraht auf ein Band aus Isoliermaterial wendelförmig aufgewickelt, und es wird dann das Band durch die Spannfedern gespannt. Die Länge der Widerstandselemente wird dadurch wesentlich vergrössert, so dass eine sehr feine Auflösung des abgegriffenen Potentials erreicht wird.

Bevorzugt werden die unteren Endanschlüsse des ersten und des zweiten Widerstandelementes mittels einer Verbindungsleitung im Messrohr – z.B. zwischen den beiden Widerstandelementen – nach oben und durch eine obere Kappe des Messrohrs hindurchgeführt. Der Füllraum des Tanks wird auf diese Weise von Messeinrichtungen freigehalten.

In der Flüssigkeit im unteren Bereich des Messrohrs und im gasförmigen Umgebungsmedium im oberen Bereich des Messrohrs liegen oft verschiedene Temperaturverteilungen vor. Eine gute Wärmeleitfähigkeit des Messrohrs stellt sicher, dass die Temperaturverteilung der Tankfüllung im wesentlichen auch in der entsprechenden Füllraum-Zone des Messrohrs vorhanden ist.

Falls die Genauigkeit des Systems erhöht werden soll, lässt sich in einer Weiterbildung an einem Ende des Messrohrs ein Temperaturfühler mit nachgeschaltetem Temperaturmesskreis vorsehen, um dort die örtliche Temperatur zu messen. Zusätzlich lässt sich zum Beispiel der Widerstand der vollständigen Länge des zweiten Widerstandelements messen und daraus die mittlere Temperatur im Messrohr bestimmen. Aus dem vom Temperaturfühler gewonnenen lokalen Temperaturwert und aus dem mittleren Temperaturwert innerhalb des Messrohrs lässt sich dann die Messung der Füllhöhe weiter korrigieren. Zur Durchführung derartiger Korrekturen ist es ferner möglich, einen Temperaturfühler mit nachgeschaltetem Temperaturmesskreis auf dem Schieber anzubringen.

Besteht das Messrohr aus einem Metall, so wird der Schieber bevorzugt mit einem dritten Schleifkontakt bestückt, der längs der Innenwand des Messrohrs entlangschleift und elektrisch mit dem ersten und zweiten Schleifkontakt verbunden ist. Die Wand des Messrohrs dient dann als Zuleitung für den ersten und den zweiten Schleifkontakt, so dass auf zusätzliche bewegliche Leitungen innerhalb des Messrohrs verzichtet werden kann.

Weitere vorteilhafte Weiterbildungen der Erfindung sind durch die Merkmale der weiteren abhängigen Ansprüche gekennzeichnet.

Im folgenden wird eine Ausführungsform der Erfindung anhand der Zeichnung näher erläutert.

Es zeigen:

Fig. 1 eine Seitenansicht des Messrohrs der erfindungsgemässen Vorrichtung im Schnitt; und

Fig. 2 ein Blockschaltbild der Vorrichtung gemäss Fig. 1.

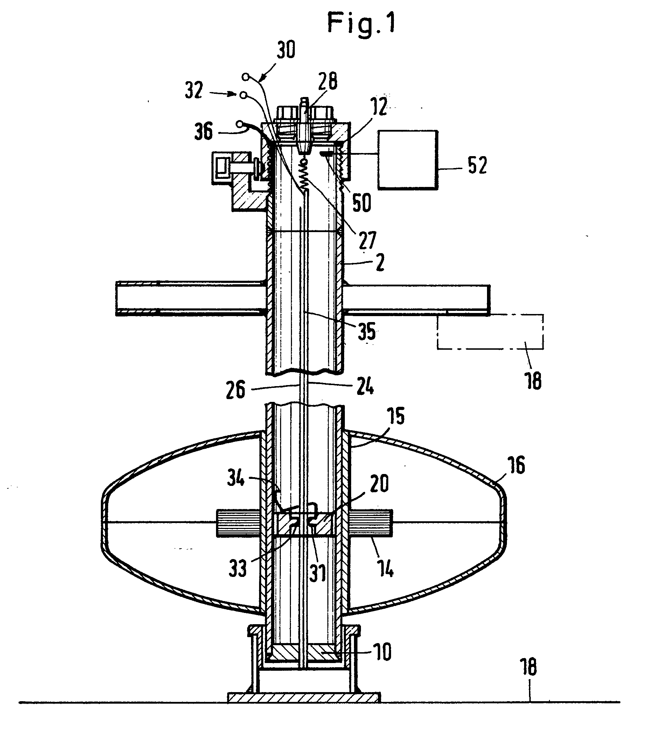

Fig. 1 zeigt eine Seitenansicht eines Messrohrs 2 im Querschnitt. Das Messrohr 2 ist vertikal in einen Tank 18 eingebaut. Ein Magnetschwimmer 14, 16 umgibt das Messrohr 2 mit einer Hülse 15, die mit einem Auftriebskörper 16 verbunden ist. An der Hülse 15 ist in Höhe des Eintauchniveaus ein Magnet 14 angeordnet, der in den Auftriebskörper 16 hineinragt. Im Messrohr 2 ist ein zylinderförmiger Schieber 20 aus magnetisiertem oder magnetisierbarem Material verschiebbar angeordnet und wird von dem Magneten 14 des Magnetschwimmers 14, 16 ständig auf der jeweiligen Füllhöhe des Tanks 18 gehalten.

Das Messrohr 2 besitzt einen kreisrunden Querschnitt. Der Schieber 20 besitzt die Form eines Kreiszylinders, dessen Zylinderfläche mit geringem Spiel längs der Innenwand des Messrohrs 2 verschiebbar ist. Das Messrohr 2 ist unten durch eine untere Kappe 10, und oben durch eine obere Kappe 12 gasdicht verschlossen.

Zentral in der Mitte des Messrohrs 2 ist ein in Längsrichtung des Messrohrs verlaufendes Band, auf das ein erstes und ein zweites Widerstandselement 24, 26 aufgewickelt sind, von der unteren Kappe 10 bis zur oberen Kappe 12 mittels einer Feder 27 gespannt, die in der oberen Kappe verankert ist. Die unteren Endanschlüsse 30, 32 der Widerstandelemente 24, 26 sind mittels einer Verbindungsleitung 35 durch das Messrohr 2 hindurch nach oben durch die obere Kappe 12 hindurch nach aussen geführt. Der obere Endanschluss 28 des ersten Widerstandselements 24 ist über die Feder 27 ebenfalls durch die obere Kappe hindurchgeführt. Das obere Ende des zweiten Widerstandselements 26 ist nirgends angeschlossen, es endet frei im Messrohr 2.

Der Schieber 20 besitzt eine mittlere Bohrung, durch welche die Widerstandselemente 24, 26 hindurchlaufen. Am Schieber 20 ist ein erster Schleifkontakt 31 vorgesehen, der am ersten Widerstandselement 24 schleift. Am Schieber 20 befindet sich ferner ein zweiter Schleifkontakt 33, der am zweiten Widerstandselement 26 schleift. Die Schleifkontakte 31, 33 sind in einer horizontalen Ebene angeordnet, die mit der jeweiligen Füllhöhe fluchtet.

Am Schieber 20 ist ein dritter Schleifkontakt 34 angebracht, der an der Innenwand des Messrohrs 2 schleift und mit dem ersten und dem zweiten Schleifkontakt 31, 33 verbunden ist. Die Wand des Messrohrs 2 stellt über den dritten Schleifkontakt 34 die Zuleitung für den ersten und zweiten Schleifkontakt 31, 33 dar und besitzt eine entsprechende Anschlussklemme 36 am oberen Ende des Messrohrs. Bewegliche Zuleitungen innerhalb des Messrohrs, welche den Aussenraum mit den verschiebbaren Schleifkontakten 31, 33 verbinden, können dadurch entfallen.

Die Widerstandselemente bestehen aus Widerstandsdraht, der auf ein Band aus Isoliermaterial eng aufgewendet ist. Dadurch wird eine hohe Auflösung der abgegriffenen Teilspannungen, und damit eine grosse Messgenauigkeit, erreicht.

Im oberen Ende des Messrohrs 2 ist ein Temperaturfühler 50 angeordnet, dem ein Temperaturmesskreis 52 nachgeschaltet ist. Sofern aus irgendeinem Grund eine weitere Steigerung der Genauigkeit des erfindungsgemässen Gerätes gewünscht wird, lässt sich mittels des Temperaturfühlers 50 lokal am oberen Ende des Messrohrs die Temperatur messen. Anschliessend lässt sich z.B. in einem vorbereitenden Messschritt der Gesamtwiderstand eines Widerstandselements bestimmen und daraus die mittlere Temperatur im gesamten Messrohr 2 ermitteln. Aus der lokalen Temperatur im oberen Ende des Messrohrs und der mittleren Temperatur im Messrohr lässt sich eine lineare Temperaturverteilung als Funktion des Ortes, und damit eine entsprechende lineare Funktion des spezifischen Widerstands in Abhängigkeit vom Ort berechnen. Bei der Ermittlung der Füllhöhe x, kann dann korrigierend diese lineare Funktion des spezifischen Widerstands in Abhängigkeit vom Ort verwendet werden. Aus der Teilspannung, die gemessen wird, ergibt sich dann über eine entsprechende Korrekturrechnung die Füllhöhe.

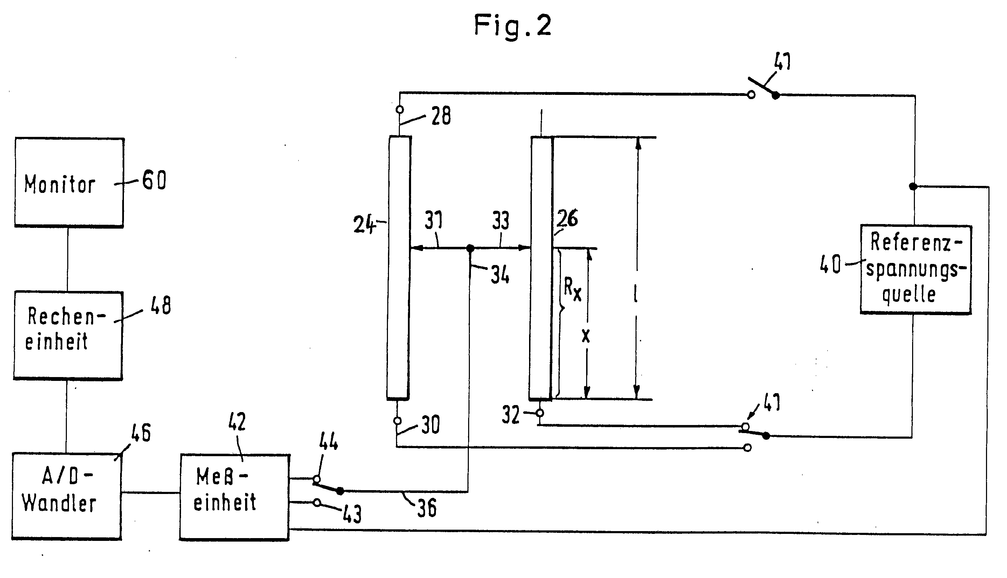

Fig. 2 zeigt ein Blockschaltbild der Vorrichtung. An die beiden Endanschlüssen 28, 30 des ersten Widerstandselements 24 ist mittels eines Schalters 41 eine Referenzspannung von einer Referenzspannungsquelle 40 anlegbar. Zwischen dem ersten Schleifkontakt 31, der an dem (nicht dargestellten) Schieber 20 angebracht ist, und dem unteren Endanschluss 30 des ersten Widerstandselements 24 wird eine Teilspannung abgegriffen und an den Spannungsmessanschluss 43 einer Messeinheit 42 gegeben. Die Messeinheit 42 gibt ein das gemessene Spannungssignal kennzeichnendes Signal an einen Analog/Digitalwandler 46 ab, der ein geeignetes, die gemessene Information enthaltendes Signal an einen Rechner 48 weiterleitet. Der Rechner 48 ermittelt aus dem gemessenen Spannungswert die abgegriffene Füllhöhe x und gibt ein entsprechendes Signal an einen Monitor 60 ab.

Der Schalter 41 wird umgelegt, so dass nunmehr die Referenzspannung an den unteren Endanschluss 32 des zweiten Widerstandselements 26 gelegt wird. Der Stromkreis setzt sich über den unteren Teilwiderstand Rx des zweiten Widerstandselements 26 bis zum zweiten Schleifkontakt 33 fort, der auf derselben Höhe sitzt wie der erste Schleifkontakt 31. Anschliessend führt der Stromkreis zum Widerstandsmessanschluss 44 der Messeinheit 42, die den Wert des Teilwiderstands Rx ermittelt. Die Messeinheit 42 gibt ein entsprechendes Signal an den Analog/Digitalwandler 46 ab, der ein entsprechendes, digitales Signal an den Rechner 48 liefert. Der Rechner 48 berechnet aus den bekannten Materialdaten des Widerstandselements 26 sowie der gespeicherten Füllhöhe x den Wert des Teilwiderstands Rx und daraus die mittlere Temperatur der Flüssigkeit in der Füllraum-Zone.

## Patentansprüche

1. Vorrichtung zur Messung der Füllhöhe und der mittleren Temperatur von Flüssigkeiten in Tankanlagen, mit

einem in der Tankanlage vertikal angeordneten Messrohr (2),

einem ersten in Längsrichtung im Messrohr (2) aufgespannten Widerstandselement (24), dessen Endanschlüsse (28, 30) aus dem Messrohr (2) herausgeführt sind,

einem zweiten in Längsrichtung im Messrohr (2) aufgespannten Widerstandselement (26), dessen unterer Endanschluss (32) aus dem Messrohr (2) herausgeführt ist,

einer Referenzspannungsquelle (40), die bei Messung der Füllhöhe an die Endanschlüsse (28, 30) des ersten Widerstandselements (24) angeschlossen ist, einer elektrischen Messeinheit (42)

und einer Recheneinheit (48), die unter Verwendung der gemessenen Füllhöhe der Flüssigkeit deren mittlere Temperatur berechnet, dadurch gekennzeichnet, dass

eine das Messrohr (2) umgebende Nachführeinrichtung (14, 15, 16) einen Schieber (20) im Messrohr (2) führt, der je einen Schleifkontakt (31, 33) längs des ersten und zweiten Widerstandselements (24, 26) entlangschleift, dass die beiden Schleifkontakte (31, 33) aus dem Messrohr (2) herausgeführt sind, dass der obere Endanschluss des zweiten Widerstandelements (26) nirgends angeschlossen ist, dass bei der Messung der Füllhöhe die elektrische Messeinheit (42) an den zugeordneten ersten Schleifkontakt (31) angeschlossen ist und die abgegriffene Teilspannung misst und ein entsprechendes Signal zur Berechnung der Füllhöhe an die Recheneinheit (48) abgibt,

dass bei der Messung der mittleren Temperatur die Referenzspannungsquelle (40) an den unteren Endanschluss (32) des zweiten Widerstandselements (26) und den zugeordneten zweiten Schleifkontakt (33) geschaltet ist und dass die Messeinheit (42) zwischen der Referenzspannungsquelle (40) und dem zweiten Schleifkontakt (33) angeschlossen ist und den abgegriffenen Teilwiderstand des zweiten Widerstandselements (26) misst und ein entsprechendes Signal zur Berechnung der mittleren Temperatur an die Recheneinheit (48) abgibt.

2. Vorrichtung nach Anspruch 1, dadurch gekennzeichnet, dass die Widerstandselemente (24, 26) je einen mit einer Spannfeder (27) gespannten Widerstandsdraht enthalten.

3. Vorrichtung nach Anspruch 1, dadurch gekennzeichnet, dass die Widerstandselemente (24, 26) je einen auf ein Band aus Isoliermaterial wendelförmig aufgewickelten Widerstandsdraht aufweisen und dass das Band mit einer Spannfeder gespannt ist.

4. Vorrichtung nach einem der vorstehenden Ansprüche, dadurch gekennzeichnet, dass die unteren Endanschlüsse (30, 32) der Widerstandselemente (24, 26) mittels einer Verbindungsleitung (35) im Messrohr (2) nach oben und durch die obere Kappe (12) des Messrohrs (2) hindurchgeführt sind.

5. Vorrichtung nach einem der vorstehenden Ansprüche, dadurch gekennzeichnet, dass das Messrohr (2) aus einem Metall hoher Wärmeleitfähigkeit besteht.

6. Vorrichtung nach Anspruch 5, dadurch gekennzeichnet, dass die Anschlussenden der an den Widerstandselementen (24, 26) laufenden Schleifkontakte (31, 33) mit einem dritten Schleifkontakt (34) verbunden sind, der längs der Innenwand des Messrohrs (2) schleift.

7. Vorrichtung nach einem der vorstehenden Ansprüche, dadurch gekennzeichnet, dass die Nachführeinrichtung (14, 15, 16) einen das Messrohr (2) ringförmig umgebenden Magnetschwimmer enthält und dass der Schieber (20) aus magnetischem Material besteht und vom Magnetschwimmer auf die jeweilige Füllhöhe nachgeführt ist.

8. Vorrichtung nach einem der vorstehenden Ansprüche, dadurch gekennzeichnet, dass das Messrohr (2) doppelwandig ausgebildet ist und zwischen dem Innenrohr und dem Aussenrohr eine Isolationsfüllung enthält.

9. Vorrichtung nach einem der vorstehenden Ansprüche, dadurch gekennzeichnet, dass in einem Ende des Messrohrs (2) ein Temperaturfühler (50) mit nachgeschaltetem Temperaturmesskreis (52) vorgesehen ist.

10. Vorrichtung nach einem der vorstehenden Ansprüche, dadurch gekennzeichnet, dass ein Temperaturfühler auf dem Schieber (20) angeordnet ist und mit einem Temperaturmesskreis verbunden ist.

11. Vorrichtung nach einem der vorstehenden Ansprüche, dadurch gekennzeichnet, dass das Messrohr (2) gasdicht verschlossen ist.

**Claims**

1. A device for measurement of the level and of the average temperature of liquids in tank installations, having:

a measuring tube (2) arranged vertically in the tank installation; a first resistance element (24) which is stretched in the measuring tube (2) in the direction longitudinal to it and the end connections (28, 30) to which are led out of the measuring tube (2); a second resistance element (26) which is stretched in the measuring tube (2) in the directional longitudinal to it and the bottom end connection (32) to which is led out of the measuring tube (2); a source (40) of reference voltage, which during measurment of the level is connected to the end connections (28, 30) to the first resistance element (24); an electrical measuring unit (42); and a computer unit (48) which employs the measured level of the liquid in calculating its average temperature; characterized in that a master-slave device (14, 15, 16) surrounding the measuring tube (2) guides in the measuring tube (2) a slider (20) which slides one sliding contact (31, 33) along each of the first and second resistance elements (24, 26), that the two sliding contacts (31, 33) are led out of the measuring tube (2), that the top end connection to the second resistance element (26) is not connected anywhere, that during measurement of the level the electrical measuring unit (42) is connected to the associated first sliding contact (31) and measures the partial voltage tapped off and for calculation of the level emits a corresponding signal to the computer unit (48);

that during measurement of the average temperature the source (40) of reference voltage is connected across the bottom end connection (32) to the second resistance element (26) and the associated second sliding contact (33) and that the measuring unit (42) is connected between the source (40) of reference voltage and the second sliding contact (33) and measures the partial resistance tapped off from the second resistance element (26) and for calculation of the average temperature emits a corresponding signal to the computer unit (48).

2. A device as in claim 1, characterized in that the resistance elements (24, 26) each contains one resistance wire stretched by a tension spring (27).

3. A device as in claim 1, characterized in that the resistance elements (24, 26) each exhibits one resistance wire wound spirally on a strip of insulating material, and that the strip is stretched by a tension spring.

4. A device as in one of the preceding claims, characterized in that the bottom end connections (30, 32) of the resistance elements (24, 26) are led by means of a connecting lead (35) upwards inside the measuring tube (2) and through the top cap (12) of the measuring tube (2).

5. A device as in one of the preceding claims, characterized in that the measuring tube (2) consists of a metal of high thermal conductivity.

6. A device as in claim 5, characterized in that the connection ends of the sliding contacts (31, 33) running along the resistance elements (24, 26) are connected to a third sliding contact (34) which slides along the inner wall of the measuring tube (2).

7. A device as in one of the preceding claims, characterized in that the master-slave device (14, 15, 16) contains a magnetic float surrounding the measuring tube (2) in the form of a ring, and that the slider (20) consists of magnetic material and is guided along after the magnetic float to the level at the time.

8. A device as in one of the preceding claims, characterized in that the measuring tube (2) is made with a double wall and contains an insulating filling between the inner tube and the outer tube.

9. A device as in one of the preceding claims, characterized in that in one end of the measuring tube (2) a temperature sensor (50) is provided, having a temperature measuring circuit (52) connected to it.

10. A device as in one of the preceding claims, characterized in that a temperature sensor is arranged on the slider (20) and is connected to a temperature measuring circuit.

11. A device as in one of the preceding claims, characterized in that the measuring tube (2) is closed off to be gastight.

**Revendications**

1. Dispositif pour la mesure de la hauteur de remplissage et de la température moyenne de liquides dans des citernes comprenant:
   - un tube de mesure (2) disposé verticalement dans la citerne;
   - un premier élément résistant (24) étiré dans le tube de mesure (2) selon la direction longitudinale et dont les connexions terminales (28, 30) sont amenées à l'extérieur du tube de mesure (2);
   - un deuxième élément résistant (26) étiré dans le tube de mesure (2) selon la direction longitudinale et dont la connexion terminale inférieure (32) est amenée à l'extérieur du tube de mesure (2);
   - une source de tension de référence qui est branchée aux connexions terminales (28, 30) du premier élément résistant lors de la mesure de la hauteur de remplissage;
   - une unité de mesure électrique (42),
   - et une unité de calcul (48) qui calcule la température moyenne du liquide en utilisant la hauteur mesurée de remplissage du liquide, caractérisé en ce qu'un dispositif suiveur (14, 15, 16) entourant le tube de mesure (2) guide un curseur (20) qui fait frotter un contact glissant (31, 33) le long de chacun des premier et second éléments résistants (24, 26),
   en ce que les deux contacts glissants (31, 33) sont amenés à l'extérieur du tube de mesure,
   en ce que la connexion terminale supérieure du deuxième élément résistant (26) n'est raccordée nulle part,
   en ce que, lors de la mesure de la hauteur de remplissage, l'unité de mesure électrique (42) est branchée sur le premier contact glissant (31) adjoint, mesure la tension partielle prélevée et fournit un signal correspondant à l'unité de calcul (48) en vue du calcul de la hauteur de remplissage,
   en ce que lors de la mesure de la température moyenne, la source de tension de référence (40) est branchée sur la connexion terminale inférieure (32) du deuxième élément résistant (26), et
   en ce que l'unité de mesure (42) est branchée entre la source de tension de référence (40) et le deuxième contact glissant (33), mesure la pression partielle prélevée du deuxième élément résistant (26) et fournit un signal correspondant à l'unité de calcul (48) en vue du calcul de la température moyenne.

2. Dispositif selon la revendication 1, caractérisé en ce que les éléments résistants (24, 26) contiennent chacun un fil résistant tendu par un ressort de tension (27).

3. Dispositif selon la revendication 1, caractérisé en ce que les éléments résistants (24, 26) présentent chacun un fil résistant enroulé sous forme hélicoïdale sur une bande en matériau isolant et en ce que la bande est tendue par un ressort de tension.

4. Dispositif selon une des revendications précédentes, caractérisé en ce que les connexions terminales inférieures (30, 32) des éléments résistants (24, 26) sont amenées vers le haut au moyen d'un conducteur de liaison (35) dans le tube de mesure (2) et à travers le capot supérieur (12) du tube de mesure (2).

5. Dispositif selon l'une des revendications précédentes, caractérisé en ce que ce tube de mesure (2) est constitué d'un métal à conduction thermique élevée.

6. Dispositif selon la revendication 1, caractérisé en ce que les connexions terminales des contacts glissants (31, 33) se déplaçant sur les éléments résistants (24, 26) sont reliées à un troisième contact glissant (34) qui frotte le long de la paroi intérieure du tube de mesure (2).

7. Dispositif selon l'une des revendications précédentes, caractérisé en ce que le dispositif suiveur (14, 15, 16) contient un flotteur à aimant entourant le tube de mesure (2) à la manière d'un anneau et en ce que le curseur (20) est constitué en matériau magnétique et est amené par le flotteur à aimant à chaque fois à la hauteur de remplissage.

8. Dispositif selon l'une des revendications précédentes, caractérisé en ce que le tube de mesure (2) est réalisé à double paroi et contient une garniture d'isolement entre le tube intérieur et le tube extérieur.

9. Dispositif selon l'une des revendications précédentes caractérisé en ce que dans une extrémité du tube de mesure, on prévoit un capteur de température (50) comportant un circuit de mesure de température (52) branché en aval.

10. Dispositif selon l'une des revendications précédentes, caractérisé en ce qu'un capteur de température est disposé sur le curseur (20) et est relié à un circuit de mesure de température.

11. Dispositif selon l'une des revendications précédentes, caractérisé en ce que le tube de mesure (2) est fermé de manière étanche au gaz.

# Fig.1

Fig.2